# EUROPEAN PATENT APPLICATION

(11) **EP 4 821 778 A1**
(43) Date of publication of application: **14.10.2026**
(21) Application number: 25777833.2
(22) Date of filing: 21.02.2025
(51) Int. Cl.: B60W 40/068

(54) **TRANSPORT VEHICLE AND TRANSPORT WORK SYSTEM**

(30) Priority: 26.03.2024 JP 2024049594
(71) Applicant: Hitachi Construction Machinery Co., Ltd., Tokyo 110-0015 (JP)
(72) Inventor: ICHINOSE, Masanori, Tokyo 100-8280 (JP); HITA, Masafumi, Tsuchiura-shi, Ibaraki 300-0013 (JP)
(74) Representative: Manitz Finsterwald Patent- und Rechtsanwaltspartnerschaft mbB
(86) International application number: PCT/JP2025/006080
(87) International publication number: WO 2025/204368

(57) **Abstract**

The object is to accurately grasp a road surface condition, such as the slipperiness of the road surface, from the state of a vehicle while traveling, and to obtain a traveling speed that achieves both safety and work efficiency of a hauling vehicle. A controller of the hauling vehicle includes: a µ calculation section that calculates a friction coefficient of a road surface based on a measurement result of a sensor; a ω calculation section that calculates a slip ratio of a wheel relative to the road surface based on the measurement result of the sensor; a parameter estimation section that estimates a parameter indicating a road surface condition; a maximum friction estimation section that estimates a maximum friction coefficient of the road surface; and a speed limit section that calculates an upper limit speed of the hauling vehicle according to the maximum friction coefficient and limits the target speed. The parameter estimation section estimates the parameter indicating the road surface condition in a linear area where a relationship between the friction coefficient and the slip ratio is linear. The maximum friction estimation section estimates the maximum friction coefficient based on the parameter in the linear area.

## Description

### Technical Field

The present invention relates to a hauling vehicle and a hauling work system.

### Background Art

Some hauling vehicles, such as dump trucks that transport materials including ore and soil and sand excavated in strip mining or the like, travel using electric power generated by a generator connected to an engine to drive electric motors. By using electric motors as the drive source, the hauling vehicles can eliminate the transmission and reduce maintenance costs, and electrification also improves energy efficiency and enables precise management of driving torque or the like.

Such a hauling vehicle loads materials onto a tray at a loading site where minerals are excavated, travels on a haul road to transport them to a dumping site, and dumps (discharges) the loaded materials at the dumping site. The hauling vehicle is configured to be able to tilt the tray for dumping to drop off the materials from the rear of the vehicle. The hauling vehicle, with its tray emptied, then travels on the haul road and returns to the loading site, repeating the same loading, hauling, and dumping process multiple times to perform the work. Furthermore, to improve overall work efficiency across the mine site, a traffic control device is constructed to manage the work content of hauling vehicles within the site. The traffic control device is configured to issue various commands regarding work, such as a planned travel route and a target speed, to individual hauling vehicles via wireless communication or the like.

As an indicator of the work efficiency of such hauling work, an indicator indicating the weight of materials transported per unit time is generally used. According to this indicator, it can be found that the work efficiency can be improved by loading as many materials as possible onto a hauling vehicle at one time and traveling at as fast a speed as possible. The payload weight of the hauling vehicle is determined for each vehicle, and a target speed for safe travel is set for each mine site, so there is an upper limit to work efficiency. Furthermore, when road surface conditions deteriorate due to bad weather, such as when the road surface becomes muddy, the target speed may be reduced compared with that in fair weather, or individual operators may reduce speed to a safe traveling speed by determining the road surface conditions. As a result, work efficiency inevitably decreases in bad weather compared to work efficiency in fair weather. To minimize this decrease in work efficiency while ensuring safety in such situations, it is necessary to minimize speed reductions within the range that still permits safe travel.

Therefore, it is important for such hauling vehicles and traffic control devices to accurately grasp road surface conditions, such as the slipperiness of the road surface, from the state of the vehicle while traveling, accurately determine the deterioration of road surface conditions before slip occurs, and set a target speed to obtain a traveling speed that achieves both safety and work efficiency.

Patent Literature 1 is known as a technique for ensuring traveling stability of a vehicle by obtaining a maximum value of a friction coefficient of a road surface (road surface µ) from a road surface condition. Patent Literature 1 describes estimating a road surface µ gradient value of each wheel based on the wheel speed detected by a wheel speed sensor, and states that each wheel target braking force setting section sets (distributes) a target braking force of each wheel based on a vehicle target braking force and the road surface µ gradient value of each wheel.

### Citation List

### Patent Literature

Patent Literature 1: JP 2001-287635 A

### Summary of Invention

### Technical Problem

The technique described in Patent Literature 1 determines that the road surface µ has reached a maximum value when the road surface µ gradient value becomes approximately zero. As a result, in order to grasp the road surface condition, the technique described in Patent Literature 1 requires actually braking the vehicle until the road surface µ reaches the maximum value and measuring the state of the vehicle at that time. Therefore, the technique described in Patent Literature 1 requires difficult traveling operation to obtain high frictional force even on a slippery road surface, and thus it is not easy to obtain the maximum value of the road surface µ.

Furthermore, in hauling vehicles such as dump trucks, strong braking that requires a high frictional force comparable to that of passenger cars is rarely performed except in emergency stops, in order to ensure the stability of the loaded materials. Therefore, in the hauling vehicles, it is only possible to obtain measured values of the vehicle's state during normal traveling, and it is almost impossible to obtain measured values of the vehicle's state during an emergency stop. Therefore, even if the technique described in Patent Literature 1 is applied to hauling vehicles, the road surface µ gradient value rarely becomes approximately zero, making it extremely difficult to obtain the maximum value of the road surface µ.

The present invention has been made in view of the foregoing, and aims to accurately grasp a road surface condition, such as the slipperiness of the road surface, from the state of the vehicle while traveling, and to obtain a traveling speed that achieves both safety and work efficiency of the hauling vehicle.

### Solution to Problem

To solve the above issues, the hauling vehicle of the present invention is a hauling vehicle that travels at a target speed on a planned travel route. The hauling vehicle includes: a controller that controls traveling of the hauling vehicle; and a sensor that measures a state of a wheel while the hauling vehicle is traveling. The controller includes: a µ calculation section that calculates a friction coefficient of a road surface on which the wheel contacts ground on the planned travel route based on a measurement result of the sensor; a ω calculation section that calculates a slip ratio of the wheel relative to the road surface based on the measurement result of the sensor; a parameter estimation section that estimates a parameter indicating a road surface condition of the planned travel route, expressed by a relationship between the friction coefficient and the slip ratio, based on calculation results of the µ calculation section and the ω calculation section; a maximum friction estimation section that estimates a maximum friction coefficient at which the friction coefficient on the planned travel route is maximized based on the parameter estimated by the parameter estimation section; and a speed limit section that calculates an upper limit speed of the hauling vehicle according to the maximum friction coefficient estimated by the maximum friction estimation section and limits the target speed according to the calculated upper limit speed. The parameter estimation section estimates the parameter indicating the road surface condition in a linear area where a relationship between the slip ratio and the friction coefficient is linear, based on the measurement result of the sensor when traveling on the planned travel route at the target speed, and the maximum friction estimation section estimates the maximum friction coefficient based on the parameter in the linear area estimated by the parameter estimation section and a table in which the parameter in the linear area is associated with the maximum friction coefficient.

### Advantageous Effects of Invention

According to the present invention, it is possible to accurately grasp a road surface condition, such as the slipperiness of the road surface, from the state of the vehicle while traveling, and to obtain a traveling speed that achieves both safety and work efficiency of the hauling vehicle.

Other problems, components, and advantageous effects will become apparent from the following description of embodiments.

### Brief Description of Drawings

Fig. 1 is a side view of a hauling vehicle.
Fig. 2 is a diagram showing the relationship between a tire force and a slip ratio.
Fig. 3 is a diagram showing the relationship between a friction coefficient of a road surface and a slip ratio.
Fig. 4 is a diagram showing the functional configuration of the hauling vehicle of the present embodiment.
Fig. 5 is a diagram illustrating load movement on the wheels of the hauling vehicle.
Fig. 6 is a flowchart showing an example of processing performed by a controller shown in Fig. 4.
Fig. 7 is a diagram showing the configuration of a hauling work system.

### Description of Embodiments

Embodiments of the present invention will be described below with reference to the drawings. Note that components with the same reference numerals in each embodiment have similar components in each embodiment unless otherwise specified, and their description will be omitted.

### [First Embodiment]

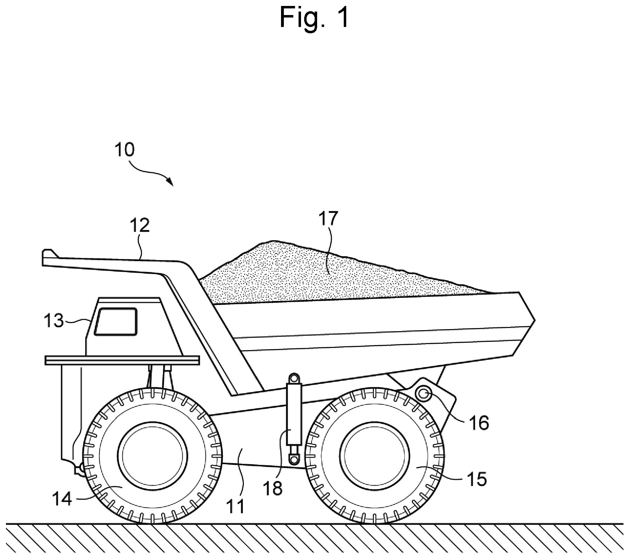

With reference to Fig. 1 to Fig. 6, a first embodiment of the present invention will be described. Fig. 1 is a side view of a hauling vehicle 10.

The hauling vehicle 10 is a hauling vehicle with the function of autonomously traveling at a target speed on a planned travel route. The hauling vehicle 10 is, for example, a dump truck. In the present embodiment, as an example of the hauling vehicle 10, a mining dump truck that transports materials such as ore and soil and sand excavated in strip mining or the like will be described by way of example.

The hauling vehicle 10 includes a vehicle body frame 11, a tray 12 supported on the vehicle body frame 11 by a support shaft 16 so as to be raised and lowered, a hoist cylinder 18 that raises and lowers the tray 12, a cabin 13 attached to the front part of the vehicle body frame 11, a left-right pair of front wheels 14 and a left-right pair of rear wheels 15, which are attached to respective front and rear parts of the vehicle body frame 11, and the like.

The cabin 13 includes a driver's seat (not shown), where an operator can sit and operate an accelerator pedal, a brake pedal, a steering wheel, and the like. With the autonomous traveling function, the hauling vehicle 10 is configured to be able to make operation input to operating devices including these pedals or steering wheel either directly or indirectly by inputting pseudo signals. Thus, the hauling vehicle 10 is able to travel autonomously by determining the amount of operation of the operating devices and making operation input based on the self-position acquired by a GNSS device, a travel route map including planned travel routes and a target speed for each route that are set in advance, and measured values of the vehicle's state obtained by internal sensors.

Furthermore, major components are mounted on the vehicle body frame 11, including an engine and a generator that generate electric power that powers the hauling vehicle 10, a drive system including an electric motor that drives and regeneratively brakes the rear wheels 15 serving as the driving wheels, and a suspension (suspension device) that supports the front wheels 14 and the rear wheels 15 to allow vertical movement. The hauling vehicle 10 is configured to travel freely on the road surface using the wheels 14, 15. In order to support the extremely large load of the vehicle body frame 11, the suspension includes a hydraulic component called strut instead of a mechanical spring. The strut is a spring-damper mechanism consisting of a piston and a cylinder and is configured to exert a spring effect by the compression action of the hydraulic fluid sealed inside the cylinder. Therefore, the pressure of the hydraulic fluid inside the strut is proportional to the load supported by the strut.

Furthermore, a wheel speed sensor for measuring the rotational speed of each wheel is attached to each of the front wheels 14 and the rear wheels 15. The wheel speed sensor is generally configured by a rotary encoder attached to the axle or the electric motor shaft of the driving wheel. The rotary encoder is configured to generate electrical pulses according to the rotation angle of the wheel. Therefore, the rotational speed of each wheel is measured from the time interval (frequency) of the electrical pulses of the rotary encoder.

The tray 12 carries materials 17, such as soil and sand, loaded by an excavating machine such as a hydraulic excavator or wheel loader. By extending a hoist cylinder 209, the hauling vehicle 10 rotates the tray 12 so as to raise the front end of the tray 12 around the support shaft 16 at the rear end of the tray 12 as the center of rotation. This allows the hauling vehicle 10 to discharge the materials 17 loaded onto the tray 12 from the rear end of the tray 12.

Here, the work content of a mining dump truck will be described. A mining dump truck is a machine used to repeatedly transport materials such as soil and sand or minerals within a mining site. At the mining site, excavating machines such as hydraulic excavators perform excavation work, including removing overburden until a mineral vein is reached and digging up minerals. The mining dump truck approaches the vicinity of the excavating machine to have the excavated soil and sand loaded thereon by the excavating machine. This location is called a loading site. The destination of the loaded materials varies depending on the contents, and the materials are transported to appropriate locations via haul roads. For example, if the materials are overburden soil and sand, the soil and sand are taken to a location for disposal and landfill, and if the materials are minerals, they are transported to a pit for transporting minerals by a stockpile or conveyor. At either location, the mining dump truck tilts the tray on the location to discharge and unload the materials. This location is called a dumping site. The empty mining dump truck then returns to the loading site to have materials reloaded thereon, and this process is repeated.

The mining site has a large number of mining dump trucks in operation, and there are typically multiple mining dump trucks at excavation locations that serve as loading sites. There are also multiple dumping sites, including at least dumping sites for ore and dumping sites for overburden. A traffic control device is in operation at the mining site to ensure that excavating machines and hauling vehicles can proceed work efficiently and that hauling vehicles can travel to required locations between these dumping sites at appropriate timing. At the mining site that uses a hauling work system for unmanned and automated hauling vehicle operations, the basic function of the traffic control device for hauling vehicles is to transmit to each vehicle, travel commands instructing the vehicle which route to travel, from which loading site to which dumping site, and at what target speed, by including them in map data showing a travel route map. The target speed included in the travel route map is typically set as the traveling speed in stable weather and on dry road surfaces.

However, since the mining site is an outdoor environment, rainfall may cause the surface of the haul roads to become wet, resulting in wet or muddy road surfaces. Furthermore, since the haul roads are unpaved, if they become too dry, dust can be raised while traveling, so water is sometimes intentionally sprinkled with a sprinkler truck or the like to make the road surface wet. If the road surface is deemed slippery due to a wet road surface or the like, the traffic control device may transmit a command to change the target speed that is transmitted along with a planned route transmitted for traveling. That is, the surface of the haul roads may become a wet road surface due to watering work, or may become a locally wet road surface due to heavy rainfall in only one part of a particularly vast mining site, so travel commands, such as the target speed, are important.

For example, if a traffic control person receives information about bad weather such as rainfall while each hauling vehicle is traveling at a target speed included in a travel route map, or if the traffic control person receives information about watering work by a sprinkler truck, the traffic control person may, for example, instruct operation at a reduced speed uniformly across the site (or for a set section) to ensure safety. In this case, the traffic control person operating the traffic control device in the traffic control room does not know how much the road surface condition has deteriorated, so the traffic control person will instruct a slightly lower target speed that ensures a large safety margin, taking into account the weather and past experience. However, at a low target speed, hauling time will take longer than usual, significantly reducing the amount of hauling per unit time, which represents work efficiency. Therefore, accurately knowing the road surface condition and not reducing the target speed more than necessary can minimize the decline in work efficiency with travel commands including an appropriate target speed.

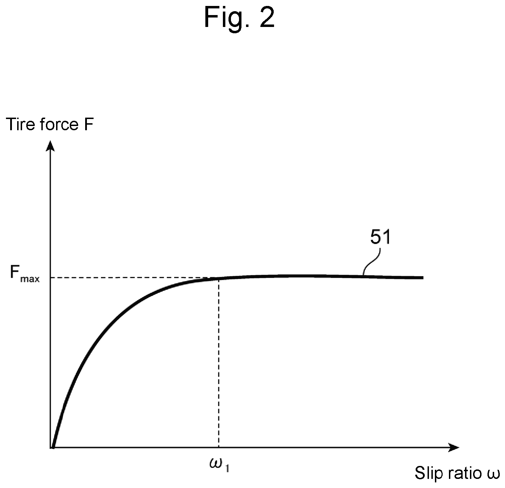

Fig. 2 is a diagram showing the relationship between a tire force and a slip ratio.

Here, the tire characteristics related to the slip of the tire mounted on the wheels 14, 15 will be described. Fig. 2 is a graph showing general tire characteristics related to the tire slip. In this description, the tire force in the front-rear direction (the tire rotation direction), which is the force that the tire generates against the road surface, will be described. The tire force in the front-rear direction mainly acts as a braking/driving force of the tire. However, it is known that similar characteristics exist for the tire force in the lateral direction (the tire width direction) that occurs when the hauling vehicle 10 turns.

When considering a tire force, regardless of whether it is in the front-rear direction or lateral direction, the tire has the characteristic of generating force through a small amount of slip with the road surface. For example, in the front-rear direction of the tire, a small amount of slip in the front-rear direction occurs between the road surface and the tire due to braking/driving torque applied to the axle, and when the tire is considered as a whole, there is a speed difference between the tire's rotational speed (wheel speed) and the vehicle body speed relative to the road surface (traveling speed). If the tire's rotational speed (wheel speed) is Vw and the vehicle body speed relative to the road surface (traveling speed) is Vb, the slip ratio ω, which is the ratio of the speed difference between the two, is expressed by Equation 1. $ω = \left(Vw-Vb\right) / Vw$ (Equation 1)

In an area where this slip ratio is small, the tire force is proportional to the slip ratio. As the slip ratio increases, the rate of increase in tire force decreases as shown by a curve 51 in Fig. 2, eventually saturating and reaching a maximum value Fmax of the tire force. This Fmax is the maximum force (maximum tire force) that the tire can generate on that road surface. It is known that the slip ratio ω1 at the maximum tire force is generally around 0.2.

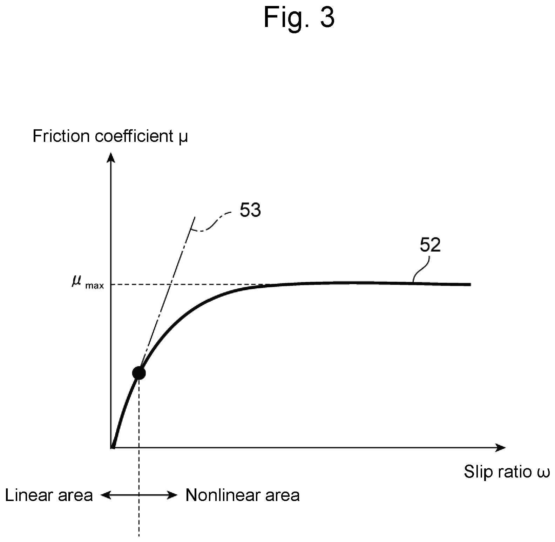

By the way, since this tire force is a frictional force, the maximum tire force Fmax that can be generated is proportional to the vertical load applied to the wheels 14, 15. The tire force characteristic graph shown in Fig. 2 shows the characteristics when the load applied to the wheels 14, 15 is constant. However, unlike a typical automobile, the hauling vehicle 10 has a payload weight that is very large relative to its own weight, and the payload typically significantly exceeds the vehicle's own weight. Furthermore, since the hauling vehicle 10 has the tray 12 located on the upper part of the vehicle body, the center-of-gravity position is located very high, so the load movement amount at the wheels 14, 15 is also large when accelerating, decelerating, or turning. In order to treat road surface conditions consistently even in such situations where the load applied to the wheels 14, 15 is likely to change significantly, herein, the tire force will be divided by the load to normalize it and treated as a friction coefficient µ. The characteristic curve for this case is shown in Fig. 3.

Fig. 3 is a diagram showing the relationship between a friction coefficient of a road surface and a slip ratio.

As with the tire force discussed above, in the area where the slip ratio is small, the friction coefficient is proportional to the slip ratio. As the slip ratio increases, the rate of increase in friction coefficient decreases as shown by a curve 52 in Fig. 3 according to the increase in the slip ratio, eventually saturating and reaching a maximum value µmax of the friction coefficient. That is, the maximum friction coefficient µmax indicates the maximum value of the friction coefficient in all areas, including a linear area where the relationship between the friction coefficient and the slip ratio is linear and a nonlinear area where this relationship is nonlinear. This maximum friction coefficient µmax is the maximum friction coefficient of the road surface on the planned travel route, and the magnitude of the maximum friction coefficient µmax indicates the slipperiness of the road surface. If a load (wheel load) applied to the wheels 14, 15 is W, a tire force Fd required for braking and driving the hauling vehicle 10 is expressed by Equation 2. $Fd > W ⋅ μmax$ (Equation 2)

That is, when the relationship in Equation 2 is reached, the frictional force cannot be withstood and the wheels 14, 15 enter full slip (tire lock). In a full slip state, the tire loses control and it becomes difficult to maintain the vehicle body in the intended direction of travel, creating an extremely dangerous situation. For this reason, the magnitude of the tire force Fd required for braking and driving the hauling vehicle 10 must always be limited to W·µmax or less to prevent the state in Equation 2 from occurring.

When operating a mining dump truck, a target speed is determined so as to be able to stop within a predetermined stopping distance. However, on slippery road surfaces such as a wet road surface, the maximum friction coefficient µmax is unknown, and thus the speed is limited to a level that allows for a sufficient safety margin so as to achieve a stopping distance below the specified level even with a small tire force. However, a trade-off is that a slower traveling speed means longer hauling time and reduced work efficiency. Therefore, in the present embodiment, the maximum friction coefficient µmax is estimated, and the target speed is limited, assuming stopping at the largest possible tire force Fd.

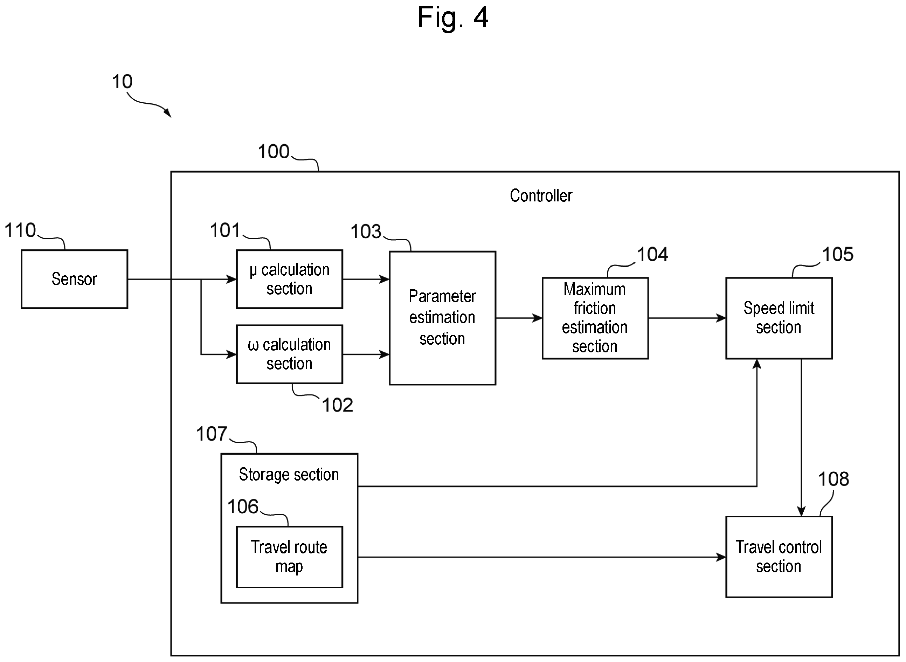

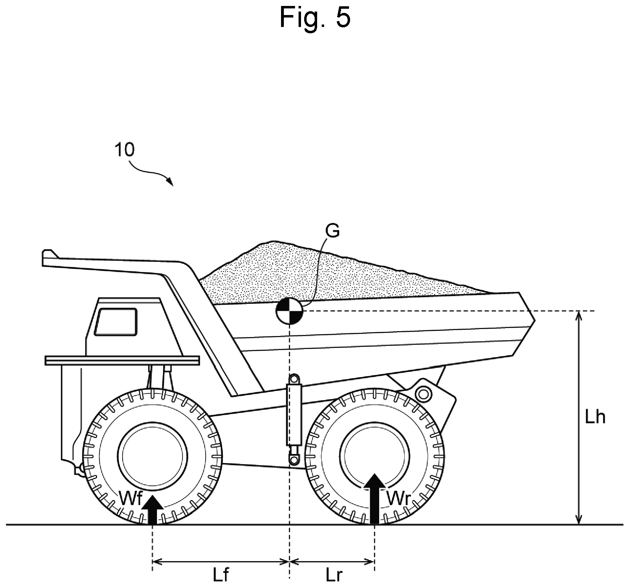

Fig. 4 is a diagram showing the functional configuration of the hauling vehicle 10 of the present embodiment. Fig. 5 is a diagram illustrating load movement on the wheels 14, 15 of the hauling vehicle 10.

The hauling vehicle 10 includes a controller 100 that controls traveling of the hauling vehicle 10, and a sensor 110 that measures states of the wheels 14, 15 while the hauling vehicle 10 is traveling.

The controller 100 is configured by a computer including a CPU, ROM, RAM, and the like, and the various functions of the controller 100 are realized by the CPU executing programs stored in the RAM.

As shown in Fig. 4, the controller 100 includes, as its various functions, a µ calculation section 101, an ω calculation section 102, a parameter estimation section 103, a maximum friction estimation section 104, and a speed limit section 105. Furthermore, the controller 100 includes a storage section 107 that stores a travel route map 106 set in advance.

As described above, for estimating the maximum friction coefficient µmax, the friction coefficient and slip ratio, which are the vertical axis and the horizontal axis of the graph in Fig. 3, are required. The friction coefficient and slip ratio are calculated from the tire force, the wheel load, which is the load applied to the wheels 14, 15, the wheel speed, the traveling speed, and the like. These physical quantities are calculated from values measured by the sensor 110 provided on the hauling vehicle 10.

The tire force is calculated based on a drive current value supplied to the electric motor that drives the wheels 14, 15. The sensor 110 includes a current sensor that measures the drive current value. Though not shown, the controller 100 may include a tire force calculation section that calculates a tire braking/driving torque from the drive current value measured by the current sensor, and calculates a tire force in the front-rear direction from the calculated braking/driving torque.

The wheel load is calculated from a suspension load supporting the wheels 14, 15. The suspension load is calculated from the pressure of the hydraulic fluid inside the strut and specifications such as the cylinder diameter, and converted into the wheel load. The sensor 110 includes a pressure sensor that measures the pressure of the hydraulic fluid inside the strut. Though not shown, the controller 100 may include a wheel load calculation section that calculates a suspension load based on the pressure of the hydraulic fluid inside the strut measured by the pressure sensor, and calculates a wheel load from the calculated suspension load.

The wheel speed is calculated from the rotation angle of the tire or wheel. The sensor 110 includes a wheel speed sensor configured by a rotary encoder or the like that generates electrical pulses according to the rotation angle of the tire or wheel. Though not shown, the controller 100 may include a wheel speed calculation section that calculates a wheel speed from the time interval between electrical pulses generated by the wheel speed sensor.

The hauling vehicle 10 is driven by the electric motor provided on the rear wheels 15 serving as the driving wheels, and further basically decelerates and stops using the regenerative torque of the electric motor. Therefore, during normal traveling, no braking/driving torque is applied to the front wheels 14, and the front wheels 14 operate purely as driven wheels. Therefore, the wheel speed of the front wheel 14 can be used as the vehicle body speed relative to the road surface (traveling speed). The controller 100 may include a traveling speed calculation section that calculates an average value of the wheel speeds of the left and right front wheels 14 serving as the driven wheels, and sets the calculated average value as the traveling speed.

The µ calculation section 101 calculates a friction coefficient of the road surface based on a measurement result obtained by the sensor 110. Specifically, the µ calculation section 101 calculates the friction coefficient by dividing the tire force in the front-rear direction calculated by the tire force calculation section described above by the wheel load calculated by the wheel load calculation section described above. Note that the µ calculation section 101 may be configured to include the tire force calculation section and the wheel load calculation section described above.

The ω calculation section 102 calculates a slip ratio of the tire based on a measurement result obtained by the sensor 110. Specifically, the ω calculation section 102 calculates the slip ratio of the rear wheel 15 serving as the driving wheel, by substituting the wheel speed calculated by the wheel speed calculation section described above and the traveling speed calculated by the traveling speed calculation section into Vw and Vb in Equation 1. Note that the ω calculation section 102 may be configured to include the wheel speed calculation section and the traveling speed calculation section described above.

The parameter estimation section 103 estimates a parameter indicating the road surface condition, which is expressed by the relationship between the friction coefficient and the slip ratio, based on the calculation results obtained by the µ calculation section 101 and the ω calculation section 102. The parameter indicating the road surface condition is a parameter that represents the tire characteristics according to the road surface condition, and is a parameter for obtaining the maximum friction coefficient µmax, preferably a parameter for obtaining the curve 52 in Fig. 3. For example, the parameter indicating the road surface condition is an initial gain 53 of the friction coefficient in the curve 52 (tire characteristic curve) in Fig. 3. This initial gain 53 indicates the ratio of the friction coefficient to the slip ratio in the linear area where the relationship between the friction coefficient and the slip ratio is linear. That is, the parameter estimation section 103 estimates the ratio (initial gain 53) of the friction coefficient to the slip ratio in the linear area where the relationship between the friction coefficient calculated by the µ calculation section 101 and the slip ratio calculated by the ω calculation section 102 is linear, as the parameter indicating the road surface condition. For example, the parameter estimation section 103 estimates the parameter indicating the road surface condition by dividing the friction coefficient calculated by the µ calculation section 101 by the slip ratio calculated by the ω calculation section 102.

The maximum friction estimation section 104 estimates a maximum friction coefficient in all areas, including the linear area where the relationship between the friction coefficient and the slip ratio is linear and the nonlinear area where the relationship is nonlinear, based on the parameter indicating the road surface condition estimated by the parameter estimation section 103. Specifically, the maximum friction estimation section 104 estimates a maximum friction coefficient based on the parameter indicating the road surface condition in the linear area estimated by the parameter estimation section 103 and a table in which the parameter in the linear area is associated with the maximum friction coefficient. For example, the controller 100 stores in advance a table indicating the relationship between the ratio of the friction coefficient to the slip ratio in the linear area, estimated by the parameter estimation section 103 as the parameter indicating the road surface condition, and the maximum friction coefficient. The maximum friction estimation section 104 estimates the maximum friction coefficient by referencing the table stored in advance and identifying the maximum friction coefficient in the table that corresponds to the ratio estimated by the parameter estimation section 103. The table can be created from a test result of a traveling test of the hauling vehicle 10 or from a result of a simulation simulating the traveling test. Furthermore, for example, the maximum friction estimation section 104 may estimate the curve 52 in Fig. 3 from the ratio of the friction coefficient to the slip ratio in the linear area estimated by the parameter estimation section 103, and estimate the maximum friction coefficient from the estimated curve 52.

The speed limit section 105 calculates an upper limit speed of the hauling vehicle 10 according to the maximum friction coefficient estimated by the maximum friction estimation section 104, and limits the target speed according to the calculated upper limit speed. There are two main calculation conditions that can be considered when the speed limit section 105 calculates the upper limit speed of the hauling vehicle 10. The first calculation condition is that the upper limit speed is calculated so that the stopping distance of the hauling vehicle 10 according to the maximum friction coefficient estimated when decelerating and stopping is equal to or less than a preset value. The second calculation condition is that the upper limit speed is calculated so as to ensure a turning centripetal force of the hauling vehicle 10 according to the maximum friction coefficient estimated when turning. However, of these two calculation conditions, the upper limit speed may be calculated to satisfy only one of the calculation conditions, or the upper limit speed may be calculated to satisfy both calculation conditions. Furthermore, the calculation conditions for the upper limit speed are not limited to these, and other calculation conditions may be used.

In the present embodiment, the following describes the case where the upper speed limit of the hauling vehicle 10 is calculated using the calculation condition that the upper speed limit is calculated so that the stopping distance of the hauling vehicle 10 according to the estimated maximum friction coefficient when decelerating and stopping is equal to or less than a preset value.

The stopping distance d when the hauling vehicle 10 traveling at a traveling speed V brakes at a deceleration a is expressed by Equation 3. $d = {V}^{2} / \left(2a\right)$ (Equation 3)

On the other hand, since the hauling vehicle 10 brakes using only the rear wheels 15, the deceleration a on a road surface with the maximum friction coefficient µmax is expressed by Equation 4, where Wb is the total weight of the hauling vehicle 10 and Wr is the load applied to the rear wheels 15. $a = μmax ⋅ Wr / Wb$ (Equation 4)

The load Wr applied to the rear wheels 15 is reduced compared to a stationary state due to load movement caused by deceleration. To explain load movement on the wheels 14, 15 using Fig. 5, the load Wr in a stationary state is expressed by Equation 5 using the distance Lf and the distance Lr from the center of gravity G to the front wheel 14 and the rear wheel 15. $Wr = Wb ⋅ Lf / \left(Lf+Lr\right)$ (Equation 5)

The load movement amount ΔWr due to deceleration is expressed by Equation 6, where g is the gravitational acceleration. $ΔWr = Wb ⋅ Lh / \left(Lf+Lr\right) ⋅ a / g$ (Equation 6)

Therefore, the load Wr applied to the rear wheels 15 during deceleration is expressed by Equation 7, where Lh is the height of the center of gravity G from the road surface. $Wr = Wb \left(Lf-Lf⋅a/g\right) / \left(Lf+Lr\right)$ (Equation 7)

By substituting Equation 7 into Equation 4 and then into Equation 3, the lower limit of the stopping distance when the road surface has the maximum friction coefficient µmax can be calculated. This should not exceed a stopping distance Dlim set in advance. That is, the traveling speed V that satisfies Equation 8 is the upper limit speed of the hauling vehicle 10. $Dlim \geq {V}^{2} / 2 μmax \times \left(Lf+Lr\right) / \left(Lf-Lh⋅a/g\right)$ (Equation 8)

Here, the speed limit section 105 calculates the load movement amount using the acceleration/deceleration of the hauling vehicle 10 to calculate the load Wr applied to the rear wheels 15. The speed limit section 105 may also directly calculate the load Wr applied to the rear wheels 15 from the measured value of the pressure of the hydraulic fluid inside the strut, as described above.

The speed limit section 105 compares the calculated upper limit speed with the target speed included in the travel route map 106 set in advance. If the upper limit speed is lower than the target speed, the speed limit section 105 resets the target speed so that the target speed is equal to or lower than the upper limit speed. If the upper limit speed is equal to or higher than the target speed, the speed limit section 105 maintains the target speed included in the travel route map 106.

A travel control section 108 controls traveling of the hauling vehicle 10 such that the hauling vehicle 10 travels on the planned travel route included in the travel route map 106 at the target speed reset or maintained by the speed limit section 105. The travel control section 108 controls the autonomous traveling of the hauling vehicle 10 by determining the amount of operation of the operating devices, such as the accelerator pedal, and making operation input based on the self-position acquired by the GNSS device of the hauling vehicle 10, the planned travel route and the target speed, and the measured values of the vehicle's state obtained by internal sensors (traveling-related measured values such as vehicle acceleration/deceleration, wheel speed, braking/driving torque).

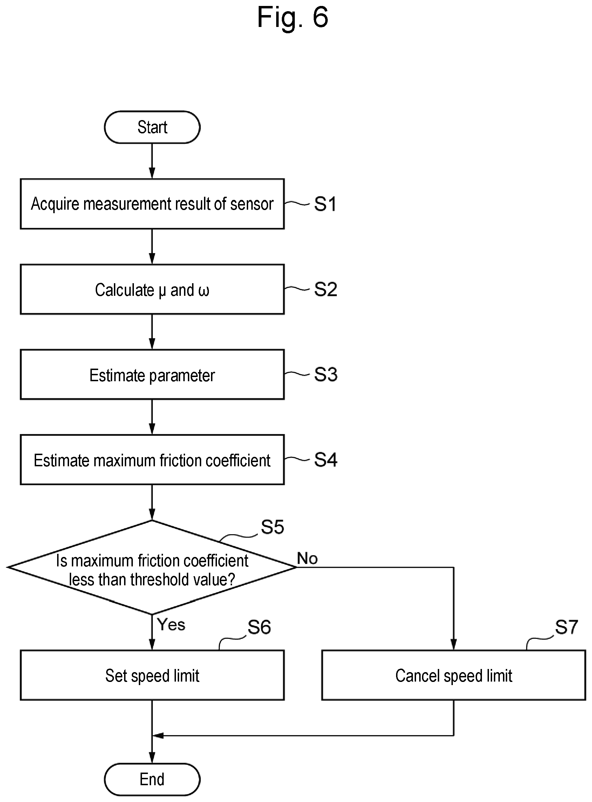

Fig. 6 is a flowchart showing an example of processing performed by the controller 100 shown in Fig. 4.

In step S1, the controller 100 acquires a measurement result of the sensor 110, which is the actual travel data of the hauling vehicle 10 at the target speed on the planned travel route.

In step S2, the controller 100 calculates a friction coefficient (µ) of a road surface and a slip ratio (ω) of a tire based on the measurement result obtained by the sensor 110.

In step S3, the controller 100 estimates a parameter indicating a road surface condition based on the calculated friction coefficient and slip ratio. The controller 100 estimates a ratio of the friction coefficient to the slip ratio in the linear area where the relationship between the friction coefficient and the slip ratio is linear as the parameter indicating the road surface condition.

In step S4, the controller 100 estimates a maximum friction coefficient of the road surface based on the estimated parameter indicating the road surface condition.

In step S5, the controller 100 determines whether the estimated maximum friction coefficient is less than a preset threshold value. This threshold value may be a value obtained by converting the target speed included in the travel route map 106 into a friction coefficient using the calculation method described using Equations 3 to 8. If the estimated maximum friction coefficient is less than the threshold value, the controller 100 proceeds to step S6. If the estimated maximum friction coefficient is equal to or greater than the threshold value, the controller 100 proceeds to step S7.

In step S6, the controller 100 sets a speed limit. Specifically, the controller 100 calculates an upper speed limit of the hauling vehicle 10 using the calculation method described using Equations 3 to 8, and limits the target speed included in the travel route map 106. The controller 100 then ends the processing shown in Fig. 6 and controls the traveling of the hauling vehicle 10 so as to travel at the limited target speed.

In step S7, the controller 100 cancels the speed limit. Specifically, the controller 100 determines that there is no problem with the road surface condition and maintains the target speed included in the travel route map 106. The controller 100 then ends the processing shown in Fig. 6 and controls the traveling of the hauling vehicle 10 so as to travel at the maintained target speed.

As described above, the hauling vehicle 10 of the first embodiment is a vehicle that travels at a target speed on a planned travel route. The hauling vehicle 10 includes the controller 100 that controls traveling of the hauling vehicle 10, and the sensor 110 that measures a state of the wheel while the hauling vehicle 10 is traveling. The controller 100 includes the µ calculation section 101 that calculates a friction coefficient of a road surface on which the wheels 14, 15 contact ground based on a measurement result of the sensor 110. The controller 100 includes the ω calculation section 102 that calculates a slip ratio of the wheel 14, 15 relative to the road surface based on the measurement result of the sensor 110. The controller 100 includes the parameter estimation section 103 that estimates a parameter indicating a road surface condition of the planned travel route, expressed by a relationship between the friction coefficient and the slip ratio, based on calculation results of the µ calculation section 101 and the ω calculation section 102. The controller 100 includes the maximum friction estimation section 104 that estimates a maximum friction coefficient at which the friction coefficient on the planned travel route is maximized based on the parameter estimated by the parameter estimation section 103. The controller 100 includes the speed limit section 105 that calculates an upper limit speed of the hauling vehicle 10 according to the maximum friction coefficient estimated by the maximum friction estimation section 104 and limits the target speed according to the calculated upper limit speed. The parameter estimation section 103 estimates the parameter indicating the road surface condition in a linear area where a relationship between the slip ratio and the friction coefficient is linear, based on the measurement result of the sensor 110 when traveling on the planned travel route at the target speed. The maximum friction estimation section 104 estimates the maximum friction coefficient based on the parameter in the linear area estimated by the parameter estimation section 103 and a table in which the parameter in the linear area is associated with the maximum friction coefficient.

As a result, the hauling vehicle 10 of the first embodiment can easily estimate the maximum friction coefficient of the road surface from the measurement result during normal traveling, without actually braking the hauling vehicle 10 until the friction coefficient of the road surface reaches a maximum value and measuring the state of the hauling vehicle 10 at that time. Therefore, if the road surface condition deteriorates to a wet or muddy road surface due to a sudden change in weather, for example, the hauling vehicle 10 of the first embodiment can immediately determine the slipperiness of the road surface and limit the target speed to the minimum necessary decrease from the target speed before the hauling vehicle 10 slips. Consequently, the hauling vehicle 10 of the first embodiment can set a target speed that achieves both safety and work efficiency of the hauling vehicle 10 even when the road surface condition deteriorates. Therefore, according to the first embodiment, it is possible to accurately grasp the road surface condition from the state of the vehicle while traveling, and obtain a traveling speed that achieves both safety and work efficiency of the hauling vehicle 10.

Furthermore, in the hauling vehicle 10 of the first embodiment, if the upper limit speed is lower than the target speed set in advance, the speed limit section 105 resets the target speed such that the target speed is equal to or lower than the upper limit speed. If the upper limit speed is equal to or higher than the target speed set in advance, the speed limit section 105 maintains the target speed set in advance.

As a result, the hauling vehicle 10 of the first embodiment can reliably ensure safety by limiting the speed when the road surface condition deteriorates, and can reliably ensure work efficiency by canceling the speed limit without delay when the road surface condition improves. Therefore, according to the first embodiment, it is possible to accurately grasp the road surface condition from the state of the vehicle while traveling, and obtain a traveling speed that surely achieves both safety and work efficiency of the hauling vehicle 10.

Furthermore, in the hauling vehicle 10 of the first embodiment, the speed limit section 105 calculates the upper speed limit such that a stopping distance of the hauling vehicle 10 according to the maximum friction coefficient estimated by the maximum friction estimation section 104 is equal to or less than a preset value.

As a result, the hauling vehicle 10 of the first embodiment can surely stop within the preset stopping distance when decelerating and stopping, thereby actively preventing collisions with preceding vehicles and further reliably ensuring safety. Therefore, according to the first embodiment, it is possible to accurately grasp the road surface condition from the state of the vehicle while traveling, and obtain a traveling speed that more surely achieves both safety and work efficiency of the hauling vehicle 10.

Furthermore, in the hauling vehicle 10 of the first embodiment, the controller 100 stores in advance a table indicating the relationship between the ratio in the linear area and the maximum friction coefficient. The maximum friction estimation section 104 estimates the maximum friction coefficient by referencing the table stored in advance. Various tables are provided, for example, depending on the external environment that affects the road surface condition. Examples include a table indicating the relationship between a parameter indicating a road surface condition and a maximum friction coefficient, in which the association varies depending on weather conditions, or in which the association varies depending on the road surface material (type of minerals or soil and sand), the road surface roughness (size of the soil and sand or rock that make up the road surface), or the like. Furthermore, the travel route for the hauling vehicle 10 can be divided into multiple travel sections. For each travel section, the maximum friction estimation section 104 can estimate the maximum friction coefficient based on the obtained sensor data (measurement result of the sensor 110) and reflect this on the target speed (output to the speed limit section 105).

As a result, the hauling vehicle 10 of the first embodiment can significantly reduce the calculation time required to estimate the maximum friction coefficient while traveling, making it even easier to estimate the maximum friction coefficient. Therefore, according to the first embodiment, it is possible to accurately and easily grasp the road surface condition from the state of the vehicle while traveling, and easily obtain a traveling speed that achieves both safety and work efficiency of the hauling vehicle 10.

### [Second Embodiment]

Next, a second embodiment of the present invention will be described. In the description of the second embodiment, the description of the same components as those in the first embodiment will be omitted.

In the second embodiment, the speed limit section 105 calculates an upper limit speed of the hauling vehicle 10 using the calculation condition that the upper limit speed is calculated so as to ensure a turning centripetal force of the hauling vehicle 10 according to the maximum friction coefficient estimated when turning. The speed limit section 105 then limits the target speed according to the calculated upper limit speed.

The centripetal acceleration a when the hauling vehicle 10 makes a circular turn with a turning radius r while traveling at a traveling speed V is expressed by Equation 9. $a = {V}^{2} / r$ (Equation 9)

On the other hand, the maximum centripetal acceleration on a road surface with the maximum friction coefficient µmax is µmax if the lateral load movement of the hauling vehicle 10 is ignored. That is, the upper limit Vmax of the speed at which turning is possible is expressed by Equation 10. $Vmax = √ \left(μmax⋅r\right)$ (Equation 10)

Therefore, Vmax expressed by Equation 10 is the upper limit speed of the hauling vehicle 10. The turning radius r is set in advance in the planned travel route included in the travel route map 106. The speed limit section 105 can acquire the turning radius r by reading it from the travel route map 106.

As described above, in the hauling vehicle 10 of the second embodiment, the speed limit section 105 calculates the upper speed limit so as to ensure a turning centripetal force of the hauling vehicle 10 according to the maximum friction coefficient estimated by the maximum friction estimation section 104.

As a result, the hauling vehicle 10 of the second embodiment can reliably ensure a turning centripetal force that prevents deviation from the planned travel route when turning. In order to avoid an unstable event such as route deviation on a curved road, it is necessary to reduce the speed in advance. The hauling vehicle 10 of the second embodiment can measure the state of the hauling vehicle 10 while traveling on the curved road and instantly determine the slipperiness of the road surface, and can limit the target speed before the hauling vehicle 10 slips so as to ensure a turning centripetal force that prevents deviation from the planned travel route. Therefore, the hauling vehicle 10 of the second embodiment can actively prevent collisions with vehicles traveling parallel or oncoming in adjacent lanes, further ensuring safety. Therefore, according to the second embodiment, it is possible to accurately grasp the road surface condition from the state of the vehicle while traveling, and obtain a traveling speed that more surely achieves both safety and work efficiency of the hauling vehicle 10.

### [Third Embodiment]

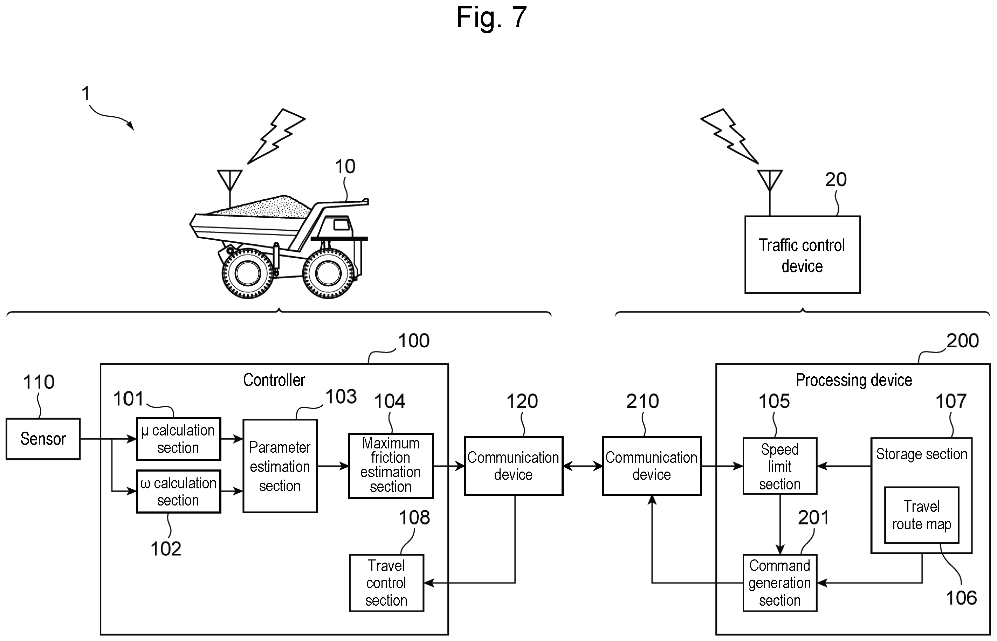

Next, a third embodiment of the present invention will be described with reference to Fig. 7. In the description of the third embodiment, the description of the same components as those in the first or second embodiment will be omitted.

In the third embodiment, a hauling work system 1 is realized in which the speed limit section 105 and the storage section 107 are provided in a traffic control device 20, and the hauling vehicle 10 travels in accordance with a travel command from the traffic control device 20.

Fig. 7 is a diagram showing the configuration of the hauling work system 1.

The hauling work system 1 includes the traffic control device 20 that generates a travel command for the hauling vehicle 10 to travel on a planned travel route and at a target speed, and the hauling vehicle 10 that travels in accordance with the travel command from the traffic control device 20.

The hauling vehicle 10 includes the controller 100 that controls traveling of the hauling vehicle 10, the sensor 110 that measures states of the wheels 14, 15 while the hauling vehicle 10 is traveling, and a communication device 120 that communicates with the traffic control device 20.

The controller 100 includes the µ calculation section 101 that calculates a friction coefficient of a road surface based on a measurement result of the sensor 110, the ω calculation section 102 that calculates a slip ratio based on the measurement result of the sensor 110, and the parameter estimation section 103 that estimates a parameter indicating a road surface condition based on calculation results of the µ calculation section 101 and the ω calculation section 102. The controller 100 includes the maximum friction estimation section 104 that estimates a maximum friction coefficient on the planned travel route based on the parameter estimated by the parameter estimation section 103. The controller 100 includes the travel control section 108 that controls traveling of the hauling vehicle 10 in accordance with the travel command transmitted from the traffic control device 20. The parameter estimation section 103 estimates the parameter indicating the road surface condition in a linear area. The maximum friction estimation section 104 estimates the maximum friction coefficient based on the parameter in the linear area estimated by the parameter estimation section 103 and a table in which the parameter in the linear area is associated with the maximum friction coefficient.

The communication device 120 transmits the maximum friction coefficient estimated by the maximum friction estimation section 104 to the traffic control device 20. The communication device 120 receives the travel command transmitted from the traffic control device 20 and transmits it to the travel control section 108.

The traffic control device 20 includes a processing device 200 that generates a travel command for the hauling vehicle 10, and a communication device 210 that communicates with the hauling vehicle 10.

The processing device 200 includes the storage section 107 that stores the travel route map 106 set in advance. The processing device 200 includes the speed limit section 105 that calculates the upper limit speed of the hauling vehicle 10 according to the maximum friction coefficient transmitted from the hauling vehicle 10 and limits the target speed according to the calculated upper limit speed. The processing device 200 includes a command generation section 201 that generates a travel command according to the target speed limited by the speed limit section 105.

The communication device 210 receives the maximum friction coefficient transmitted from the hauling vehicle 10 and transmits it to the speed limit section 105. The communication device 210 transmits the travel command generated by the command generation section 201 to the hauling vehicle 10.

As a result, the hauling work system 1 of the third embodiment, like the first embodiment, can accurately grasp a road surface condition, such as the slipperiness of the road surface, from the state of the vehicle while traveling, and can obtain a traveling speed that achieves both safety and work efficiency of the hauling vehicle 10.

Note that the present invention is not limited to the above-described embodiments and includes various modifications. For example, the above-described embodiments have been described in detail to clearly explain the present invention, and is not necessarily limited to an embodiment that includes all of the components described.

For example, in the above embodiments, the hauling vehicle 10 is configured to travel autonomously, but the hauling vehicle 10 may also be configured to travel partially or entirely manually in accordance with an operator's operation.

Furthermore, a part of the components of a certain embodiment may be replaced with the components of another embodiment, and the components of another embodiment may be added to the components of a certain embodiment. Furthermore, with respect to a part of the components of each embodiment, addition, deletion, and/or substitution of another component is also possible.

Furthermore, the above-mentioned components, functions, processing sections, or processing means may be realized in part or in whole by hardware, for example by designing them as integrated circuits. Furthermore, the above-mentioned components or functions may be realized by software, with a processor interpreting and executing a program that realizes each function. Information such as the programs, tables, or files that realize each function can be stored in a recording device such as memory, a hard disk, or an SSD (solid state drive), or on a recording medium such as an IC card, SD card, or DVD.

Furthermore, the control and information lines shown are those considered necessary for the explanation, and do not necessarily represent all control and information lines on the product. In reality, it is safe to assume that almost all components are interconnected.

### Reference Signs List

- 1: Hauling work system
- 10: Hauling vehicle
- 14, 15: Wheels
- 100: Controller
- 101: µ calculation section
- 102: ω calculation section
- 103: Parameter estimation section
- 104: Maximum friction estimation section
- 105: Speed limit section
- 110: Sensor
- 120: Communication device
- 20: Traffic control device

## Claims

1. A hauling vehicle that travels at a target speed on a planned travel route, the hauling vehicle comprising:
a controller that controls traveling of the hauling vehicle; and
a sensor that measures a state of a wheel while the hauling vehicle is traveling,
wherein
the controller includes:
a µ calculation section that calculates a friction coefficient of a road surface on which the wheel contacts ground on the planned travel route based on a measurement result of the sensor;
a ω calculation section that calculates a slip ratio of the wheel relative to the road surface based on the measurement result of the sensor;
a parameter estimation section that estimates a parameter indicating a road surface condition of the planned travel route, expressed by a relationship between the friction coefficient and the slip ratio, based on calculation results of the µ calculation section and the ω calculation section;
a maximum friction estimation section that estimates a maximum friction coefficient at which the friction coefficient on the planned travel route is maximized based on the parameter estimated by the parameter estimation section; and
a speed limit section that calculates an upper limit speed of the hauling vehicle according to the maximum friction coefficient estimated by the maximum friction estimation section and limits the target speed according to the calculated upper limit speed,
the parameter estimation section estimates the parameter indicating the road surface condition in a linear area where a relationship between the slip ratio and the friction coefficient is linear, based on the measurement result of the sensor when traveling on the planned travel route at the target speed, and
the maximum friction estimation section estimates the maximum friction coefficient based on the parameter in the linear area estimated by the parameter estimation section and a table in which the parameter in the linear area is associated with the maximum friction coefficient.

2. The hauling vehicle according to claim 1, wherein the speed limit section
resets the target speed such that the target speed is equal to or lower than the upper limit speed if the upper limit speed is lower than the target speed set in advance, and
maintains the target speed set in advance if the upper limit speed is equal to or higher than the target speed set in advance.

3. The hauling vehicle according to claim 2, wherein the speed limit section calculates the upper speed limit such that a stopping distance of the hauling vehicle according to the maximum friction coefficient estimated by the maximum friction estimation section is equal to or less than a preset value.

4. The hauling vehicle according to claim 2, wherein the speed limit section calculates the upper speed limit so as to ensure a turning centripetal force of the hauling vehicle according to the maximum friction coefficient estimated by the maximum friction estimation section.

5. A hauling work system comprising: a traffic control device that generates a travel command for a hauling vehicle to travel at a target speed on a planned travel route; and a hauling vehicle that travels in accordance with the travel command from the traffic control device,
the hauling vehicle including: a controller that controls traveling of the hauling vehicle; a sensor that measures a state of a wheel while the hauling vehicle is traveling; and a communication device that communicates with the traffic control device,
wherein
the controller includes: a µ calculation section that calculates a friction coefficient of a road surface on which the wheel contacts ground on the planned travel route based on a measurement result of the sensor; a ω calculation section that calculates a slip ratio of the wheel relative to the road surface based on the measurement result of the sensor; a parameter estimation section that estimates a parameter indicating a road surface condition of the planned travel route, expressed by a relationship between the friction coefficient and the slip ratio, based on calculation results of the µ calculation section and the ω calculation section; and a maximum friction estimation section that estimates a maximum friction coefficient at which the friction coefficient on the planned travel route is maximized based on the parameter estimated by the parameter estimation section,
the parameter estimation section estimates the parameter indicating the road surface condition in a linear area where a relationship between the slip ratio and the friction coefficient is linear, based on the measurement result of the sensor when traveling on the planned travel route at the target speed,
the maximum friction estimation section estimates the maximum friction coefficient based on the parameter in the linear area estimated by the parameter estimation section and a table in which the parameter in the linear area is associated with the maximum friction coefficient,
the communication device transmits the maximum friction coefficient estimated by the maximum friction estimation section to the traffic control device, and
the traffic control device includes a speed limit section that calculates an upper limit speed of the hauling vehicle according to the maximum friction coefficient transmitted from the hauling vehicle and limits the target speed according to the calculated upper limit speed, and generates the travel command according to the target speed limited by the speed limit section and transmits the travel command to the hauling vehicle.
